# EUROPEAN PATENT APPLICATION

(11) **EP 4 112 961 A1**
(43) Date of publication of application: **04.01.2023**
(21) Application number: 21183516.0
(22) Date of filing: 02.07.2021
(51) Int. Cl.: F16D 1/033, F16D 1/10, F16D 1/12, F16D 11/14

(54) **FITTING DEVICE**

(71) Applicant: Rolls-Royce Deutschland Ltd & Co KG, 15827 Blankenfelde-Mahlow (DE)
(72) Inventor: HORVATH, Mihaly, 15827 Blankenfelde-Mahlow (DE); KUTROVICH, Daniel, 15827 Blankenfelde-Mahlow (DE)
(74) Representative: Maikowski & Ninnemann Patentanwälte Partnerschaft mbB

(57) **Abstract**

The invention relates to a fitting device (10) comprising two fitting elements (1, 2), each of fitting elements (1, 2) connectable to an external part (11, 12) and when connected to each other, the fitting elements (1, 2) forming a form locking connection between with respective external parts (11, 12), **characterized in that** the fitting elements (1, 2) comprising or being made of material with different thermal expansion coefficients (A1, A2) and the fitting elements (1, 2) having a ringlike structure can be assembled concentrically, with at least two form locking element (3) preventing in assembly relative rotational movement between the fitting elements (1, 2), the at least two form locking element (3) being configured to allow relative radial movement (R, R') of fitting elements (1, 2) under changing thermal conditions when assembled.

## Description

The invention relates to a fitting device with the features of claim 1.

Fitting devices are used to connect parts, in particular machine parts in an aircraft engine. One example for the use of a fitting device is the connection between an electrical drive and a turbine or with another rotationally connected part used in a hybrid aircraft propulsion engine.

The geometry of the fitting device is supposed to provide concentricity between fitted elements that are attached to their respective external parts. Furthermore, the fitting device should be operable under variable thermal regimes, allowing thermal expansion both in radial and axial direction caused by extreme operating temperature range, for example in a generator-turbine system. Therefore, e.g. bolt connections are not well suited as fitting device.

Hence, fitting devices, which can operate under different thermal conditions, are required.

The issue is addressed by a fitting device with the features of claim 1.

The fitting device comprises two fitting elements, each of the fitting elements connectable to a respective external part. When connected (i.e. under assembly) to each other, the fitting elements are forming a form locking connection between the external parts. The fitting elements can be made in one piece or made from segments.

The fitting elements comprise or are made of materials (or material combinations) having different thermal expansion coefficients. The higher the thermal expansion coefficient is, the more the material expands under an increase of temperature and the more it contracts under a decrease of temperature.

The fitting elements have a ring-like structure, which can be assembled concentrically, with at least two form locking element preventing - in assembly - relative rotational movement between the fitting elements.

The at least two form locking element is being configured to allow relative radial movement of the fitting elements under changing thermal conditions when the fitting device is assembled.

With this device, thermal stress can be reduced, as it allows materials with different thermal expansion coefficient to be used in the form locking. It gives an opportunity to focus on other factors at the material selection, which can improve the efficiency of the machine.

In one embodiment, the at least two form locking element is configured to allow no relative rotational movement between the fitting elements. This can e.g. be achieved, if the at least two form locking element comprises a tongue and groove connection, the grooves extending in a radial direction, form locking the fitting elements relative to each other. The tongues can move radially in the grooves, but abut against the sidewalls in a circumferential direction. This prevents large relative movements in circumferential direction.

In one embodiment, the fitting element with the larger thermal expansion coefficient comprises tongues radially movable in the grooves.

In a further embodiment, the tongue and the groove have sidewalls parallel to a radius of the fitting elements.

For an efficient mechanical stress distribution, the form locking elements are located equally spaced around the fitting elements. The number of the form locking elements depends on the application and / or the size of the fitting device. In a typical application 5, 7 or 9 form locking elements could be used. In particular an odd number of form locking elements can be used

In one embodiment, the thermal expansion coefficient of the material of the first fitting element differs more than 10% from the thermal expansion coefficient of the material of the second fitting element. With a sufficiently large difference, relative radial movement is possible.

For an efficient movability, the thermal expansion coefficient of the material of the first fitting element differs less than 10% from the thermal expansion coefficient of the material of the first external part. This implies that difference in the thermal expansion coefficients of the materials of the external part and the first fitting element are not too large. Likewise, the thermal expansion coefficient of the material of the second fitting element differs less than 10% from the thermal expansion coefficient of the material of the second external part.

It is also possible, that the first fitting element is made of the same material as the first part and / or the material of second fitting element is made of the same material as the second part.

In one embodiment, the second part comprises or consists of aluminum, plastic, composite material and / or the first part comprises or consists of steel.

It is also possible that the fitting device transmits a torque between the first part and the second part or between the second part and the first part.

In one embodiment, the first part is part of a combustion engine or an aircraft engine and / or the second part is part of an electric drive.

In one embodiment the fitting elements are formed in one piece, e.g. the grooves and / or tongues being machined from the material of the fitting elements. Alternatively, the fitting elements comprise segments forming the at least two form locking elements, in particular the tongues and/or grooves. For example, segments can be attached to a base ring leaving gaps between the segments forming the grooves. The segments themselves could form the tongues.

The issue is also addressed by an engine with the features of claim 15. That can e.g. be an electric propulsion device or a hybrid propulsion device, in particular with a gearbox for lowering the rotational speed of a combustion turbine.

Embodiments of the invention are shown in the Figures, where
Fig. 1 shows a schematic view of two parts connected with an embodiment of a fitting device;
Fig. 2 shows a perspective view of an embodiment of a fitting device with two concentric fitting elements;
Fig. 3A shows a frontal view of the embodiment shown in Fig. 2;
Fig. 3B shows a side view of the embodiment shown in Fig. 2;
Fig. 4 shows a frontal view of the embodiment shown in Fig. 2 under higher thermal load;
Fig. 5 shows a frontal view of the embodiment shown in Fig. 2 under lower thermal load.

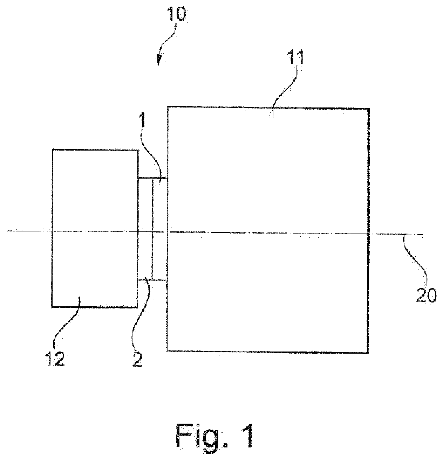

Fig. 1 schematically shows two parts 11, 12 connected through a fitting device 1 comprising two fitting elements 1, 2. The parts 11, 12 can e.g. be a turbine 12 and an electric drive 11 in an aircraft propulsion system (not shown here). The first part 11 can be connected with the second part 12, the fitting device 10.

Generally, it is required, that the fitting elements 1, 2 of the fitting device 10 remain concentrically around the rotation axis 20, even under varying thermal conditions.

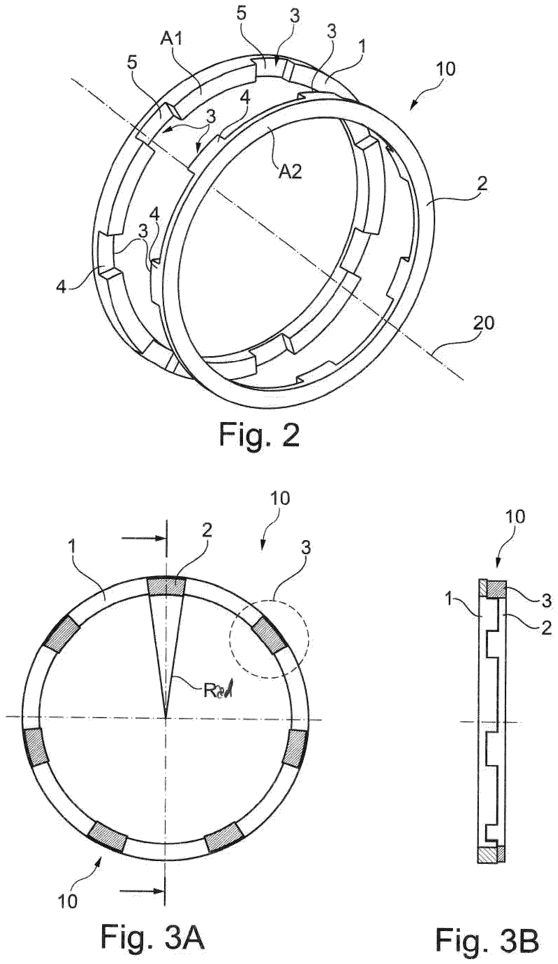

In Fig. 2 an embodiment of a fitting device 10 comprising two fitting elements 1, 2 is shown in a perspective, exploded view. The connection to the two parts 11, 12 (see Fig. 2) is not shown here for reasons of simplicity.

When the two fitting elements 1, 2 are connected (see e.g. Fig. 3A, 3B) they form a form locking connection between the parts 11, 12.

This allows for operations under varying thermal loads or conditions, the fitting elements 1, 2 having different thermal expansion coefficients A1, A2. In one embodiment, the fitting elements 1, 2 could have the same thermal expansion coefficients as the parts 11, 12 they are connected to.

A turbine 11 as the first part could have a steel part, which needs to be connected to the electric drive 12.

The first fitting element 1 (connected to the turbine 11) would then be made of steel, having the same thermal expansion coefficient A1 (value for linear thermal expansion coefficient 14 * 10⁻⁶°C⁻¹ at 20 °C) as the turbine part 11.

If e.g. an electric drive 12 as a second part has an aluminum housing, the second fitting element 2 would be made of aluminum (value for linear thermal expansion coefficient 23 * 10⁻⁶ °C⁻¹ at 20 °C), thereby having the same thermal expansion coefficient as the housing.

In any case, the fitting elements 1, 2 would have different thermal expansion coefficients A1, A2. The linear thermal expansion coefficient of aluminum is about twice as large as the linear thermal expansion coefficient of steel.

The two fitting elements 1, 2 both have a ring-like structure that can be assembled concentrically.

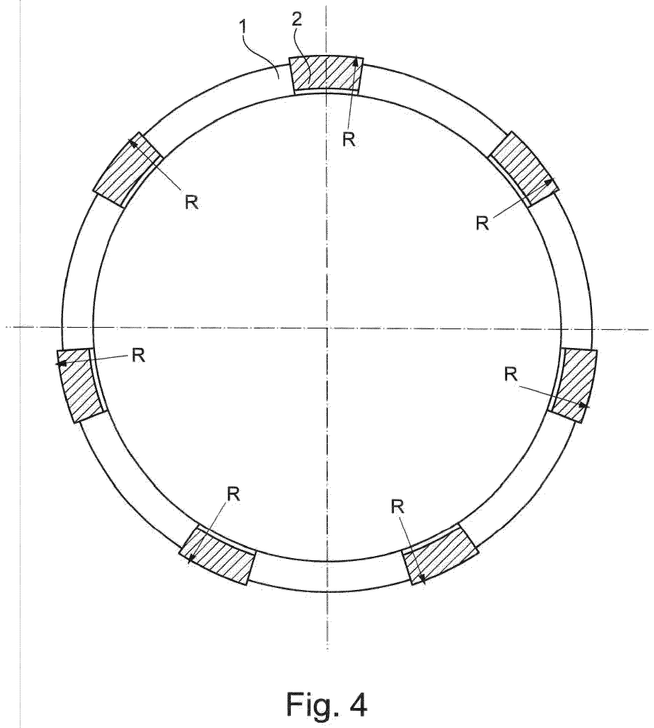

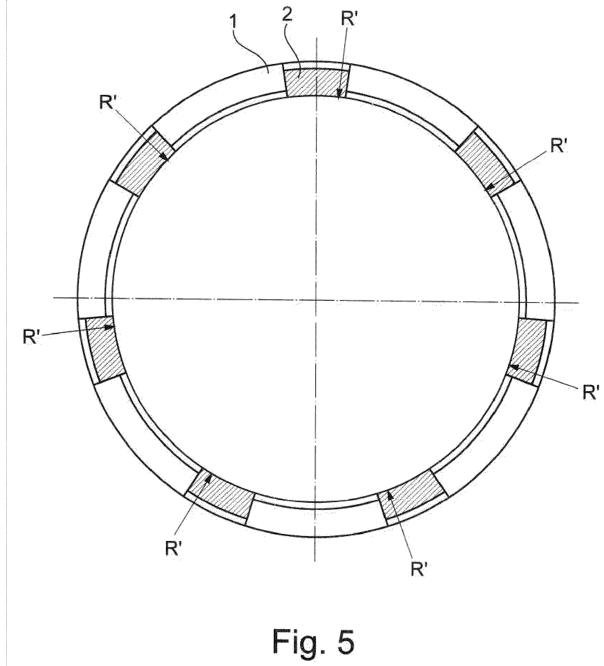

When assembled concentrically, locking elements 3 prevent relative rotational movement between the two fitting elements 1, 2. In the embodiment shown in Fig. 3 to 5 seven form locking elements 3 are distributed around the ring-like fitting elements 1, 2. Each of the seven form locking elements 3 comprises a tongue 4 and groove 5 combination so that the two fitting elements 1, 2 can be form-locked with each other. The first fitting element 1 comprises the grooves 5, the second fitting element 2 the matching tongues 4. The grooves 5 here are open at the outer circumference and the inner circumference so that the tongue 4 can move outward (see Fig. 4) and inward (see Fig. 5). In a further embodiment, the groove 5 can also be closed, so that radially there is sufficient room that the tongue 4 can move within the groove 5.

In the embodiment shown, the ring-like structures are fitting elements 1, 2 made from one piece. This means that the grooves 5 are e.g. milled from the material of the fitting elements 1, 2. It is also possible that the fitting elements 1, 2 are assembled from segments which are e.g. connected to a base ring. The segments would then form the tongues 4 and a space between the segments would form the grooves 5. The segments could be connected with screws or welded to the base ring.

It should be noted that other embodiments can have less or more than seven form locking elements 3 distributed around the ring-like fitting elements 1, 2. In the embodiment shown in Fig. 2 to 5 the form locking elements 3 are all of the same type which provided for an economical manufacturing and even stress distribution. But in other embodiments of the fitting device 10, the form locking elements 3 can have different shapes among each other.

So this is an embodiment, in which the form locking element 3 is configured to allow some relative radial movement R (as will be shown in connection with Fig. 4 and 5) under changing thermal conditions when the fitting elements 1, 2 are assembled.

The tongue 4 and groove 5 combination provides concentricity. So the rotational axis 20 of the fitted elements 1, 2 cannot move relative to each other. The ring-like fitting elements 1, 2 expand radially so the connection surface will slide on each fitting element 1, 2 in a radial direction. This means that geometrically it will not change and the axes common to the fitting elements 1, 2 will be kept in the same position, since the connecting surface will be kept in the radial direction which determines the axis.

In Fig. 3A and 3B a frontal view and a side sectional view of this embodiment is shown.

Each of the second grooves 5 in the first fitting element takes about 15° of the ring-like fitting element 1. The sidewalls of the grooves are aligned with radial lines (rad in Fig. 3A), so that the sidewalls are at a right angle with the outer and the inner circumference of the fitting element 1. The tongues 4 fitting into those grooves have a matching (i.e. complementary) wedge-like shape.

If the fitting device 10 is subjected to temperature changes (e.g. due to thermal loads or environmental effects), the material of the second fitting element 2 (here made of aluminum) will expand / contract more than the material of the first fitting element 1 (here made of steel).

If the temperature is increased, an expansion of the second fitting element 2 will be in the radial outward direction R as shown in Fig. 4.

If the temperature is decreased, a radial shrinking of the second fitting element 2 occurs in the inward direction R' as shown in Fig. 5.

The surface pairs of the form locking element 3 remain in contact due to the geometry and will keep the concentricity. For the reduction of friction, the contact faces of the form locking element 3 are coated with a low friction material or lubricated.

### List of reference numbers

- 1: first fitting element
- 2: second fitting element
- 3: form locking element
- 4: tongue
- 5: groove
- 10: fitting device

- 11: first external part
- 12: second external part

- 20: rotation axis

- A1: thermal expansion coefficient of first fitting element
- A2: thermal expansion coefficient of second fitting element

- R: radial outward movement
- R': radial inward movement
- Rad: radius of a ring-like fitting element

## Claims

1. Fitting device (10) comprising two fitting elements (1, 2), each of the fitting elements (1, 2) connectable to a respective external part (11, 12), and when connected to each other, the fitting elements (1, 2) forming a form locking connection between the external parts (11, 12),
**characterized in that**
the fitting elements (1, 2) comprising or being made of material with different thermal expansion coefficients (A1, A2) and
the fitting elements (1, 2) having a ring- like structure can be assembled concentrically, with
at least two form locking element (3) preventing in assembly relative rotational movement between the fitting elements (1, 2),
the at least two form locking element (3) being configured to allow relative radial movement (R, R') of fitting elements (1, 2) under changing thermal conditions when assembled.

2. Fitting device (10) according to claim 1, wherein the at least two form locking element (3) is configured to allow no relative rotational movement between the fitting elements.

3. Fitting device (10) according to claim 1 or 2, wherein the at least two form locking element (3) comprises a tongue (4) and groove connection (5), with the grooves (5) extending in a radial direction, form locking the fitting elements (1, 2) relative to each other.

4. Fitting device (10) according to claim 3, wherein the fitting element (2) with the larger thermal expansion coefficient (A2) comprises tongues (4) radially movable in the grooves (5).

5. Fitting device (10) according to claim 3 or 4, wherein the tongue (4) and the groove (5) have sidewalls parallel to a radius (Rad) of the fitting elements (1, 2).

6. Fitting device (10) according to at least one of the preceding claims, wherein the form locking elements (3) are located equally spaced around the fitting elements (1, 2).

7. Fitting device (10) according to at least one of the preceding claims, wherein
- the thermal expansion coefficient (A1) of the material of the first fitting element (1) differs more than 10% from the thermal expansion coefficient (A2) of the material of the second fitting element (2), and/or
- the thermal expansion coefficients (A1) of the material of the first fitting element (1) differs less than 10% from the thermal expansion coefficient of the material of the first external part (11), and/or
- the thermal expansion coefficient (A2) of the material of the second fitting element (2) differs less than 10% from the thermal expansion coefficient of the material of the second external part (12).

8. Fitting device (10) according to at least one of the preceding claims, wherein the material of the first fitting element (1) is the same as the material of the first part (11) and / or the material of the second fitting element (2) is the same as material of the second part (12).

9. Fitting device (10) according to at least one of the preceding claims, wherein the second part (12) comprises or consists of aluminum, plastic, composite material and / or the first part (11) comprises or consists of steel.

10. Fitting device (10) according to at least one of the preceding claims, wherein it transmits a torque between the first part (11) and the second part (12) or between the second part (12) and the first part (11).

11. Fitting device (10) according to at least one of the preceding claims, wherein the first part (11) is part of a combustion engine or an aircraft engine and / or the second part (12) is part of an electric drive.

12. Fitting device (10) according to at least one of the preceding claims, wherein the fitting elements (1, 2) are formed in one piece.

13. Fitting device (10) according to at least one of the claims 1 to 11, wherein the fitting elements (1, 2) comprise segments forming the at least two form locking element (3), in particular the tongues (4) and / or grooves (5).

14. An engine for an aircraft, comprising at least one electrical drive as first part (11) connected with a fitting device according to at least one of the claims 1 to 13 to a second part (12) in the engine.

15. Engine according to claim 14 that is an electric propulsion device or a hybrid propulsion device, in particular with a gearbox for lowering the rotational speed of a combustion turbine.
